# EUROPÄISCHE PATENTSCHRIFT

(11) **EP 0 587 528 B1**
(45) Veröffentlichungstag und Bekanntmachung des Hinweises auf die Patenterteilung: **11.03.1998**
(21) Anmeldenummer: 93810578.0
(22) Anmeldetag: 16.08.1993
(51) Int. Cl.: C08K 5/37, C08L 21/00

(54) **Stabilisierung von Russ-Kautschuk**
Stabilisation of carbon black containing rubber
Stabilisation de caoutchouc contenant du noir de carbone

(30) Priorität: 25.08.1992 CH 2639/92
(43) Veröffentlichungstag der Anmeldung: 16.03.1994
(73) Patentinhaber: Ciba Specialty Chemicals Holding Inc., 4057 Basel (CH)
(72) Erfinder: Knobloch, Gerrit, Dr., CH-4312 Magden (CH)

(56) Entgegenhaltungen:
- EP-A- 0 059 168
- US-A- 3 449 284
- US-A- 3 810 869

## Beschreibung

Die vorliegende Erfindung betrifft einen auf Dien-Monomeren basierenden homopolymeren, copolymeren oder terpolymeren Russ-Kautschuk enthaltend ein schwefelhaltiges, sterisch gehindertes phenolisches Antioxidans sowie die Verwendung dieser phenolischen Antioxidantien zum Stabilisieren von Russ-Kautschuk.

Schwefelhaltige, sterisch gehinderte phenolische Antioxidantien sind aus GB-A-1 135 699 bekannt. Die Stabilisierung von Vulkanisaten (vernetzter Kautschuk) wird z.B. in US-A-3 810 869 beschrieben und aus EP-A-59 168 ist die Stabilisierung von russfreiem Kautschuk bekannt.

Auf dem technischen Gebiet der Polymerverarbeitung versteht man unter dem Begriff "Russ-Kautschuk" (carbon black masterbatch) einen russhaltigen, im wesentlichen noch unvernetzten Kautschuk. Es handelt sich dabei um ein Rohprodukt, dem die für die Vulkanisation erforderlichen Vernetzungsmittel (Schwefel oder Peroxid) noch nicht zugesetzt worden sind.

Russ-Kautschuk ist eine verarbeitungsfertige Grundmischung und sollte nicht unnötig lange gelagert werden. Die Lebensdauer von russfreiem Kautschuk ist erheblich länger als die von Russ-Kautschuk. So wird zum Beispiel für den russfreien Kautschuk ®BUNA EM 1500 bei trockener Lagerung bei Temperaturen bis zu 30°C und Schutz vor direkter Sonnenbestrahlung eine Lagerungsbeständigkeit von mindestens einem Jahr angegeben, während für den Russ-Kautschuk ®BUNA EM 1605 lediglich eine Lagerungsbeständigkeit von mindestens einem halben Jahr angegeben wird.

Es ist die Aufgabe der Kautschuk-Stabilisatoren, die oxidative Vernetzung des Rohprodukts Russ-Kautschuk zu verhindern. Dies ist notwendig, um die Mischbarkeit und Formgebung zu ermöglichen. Die kontrollierte Vernetzung des Kautschuks zum Vulkanisat darf erst nach der Formgebung erfolgen, nachdem im vorangegangenen Mischprozess Vernetzungsmittel, wie z.B. Schwefel oder Peroxid, zugesetzt wurden.

Die Stabilisierung von Russ-Kautschuk bereitet grössere Schwierigkeiten als die Stabilisierung des entsprechenden russfreien Kautschuks, da es zu stabilitätsvermindernden Wechselwirkungen zwischen dem aktiven Füllstoff Russ und dem Kautschuk einerseits und dem Stabilisatorsystem andererseits kommen kann. Folglich werden bei der Stabilisierung dieser beiden Kautschuktypen unterschiedliche Anforderungen an die Wirksamkeit der Stabilisatoren gestellt.

Es ist nun gefunden worden, dass bestimmte schwefelhaltige, sterisch gehinderte phenolische Antioxidantien die Lagerungsbeständigkeit von Russ-Kautschuk ausserordentlich verbessern.

Gegenstand der vorliegenden Erfindung ist
a) ein auf Dien-Monomeren basierender homopolymerer, copolymerer oder terpolymerer Russ-Kautschuk enthaltend
b) mindestens eine Verbindung der Formel (I), 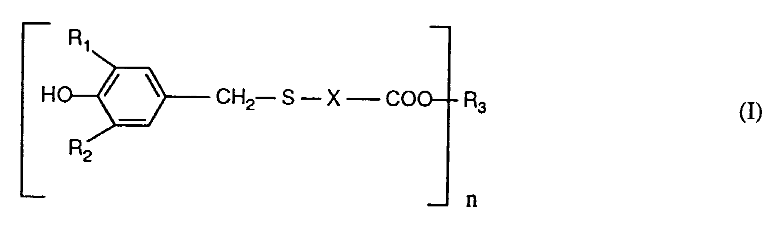 worin n 1, 2, 3 oder 4 bedeutet, R₁ und R₂ unabhängig voneinander C₁-C₄-Alkyl oder C₅-C₈-Cycloalkyl bedeuten, X Methylen oder Ethylen ist und wenn n 1 ist, R₃ C₁-C₂₀-Alkyl, durch -O- oder/und -S- unterbrochenes C₃-C₂₀-Alkyl; C₃-C₂₀-Alkenyl, C₅-C₁₂-Cycloalkyl, durch C₁-C₄-Alkyl substituiertes C₅-C₁₂-Cycloalkyl; Phenyl, durch C₁-C₄-Alkyl substituiertes Phenyl; C₇-C₁₀-Phenylalkyl oder am Phenylrest durch C₁-C₄-Alkyl substituiertes C₇-C₁₀-Phenylalkyl bedeutet, wenn n 2 ist, R₃ C₂-C₁₀-Alkylen, durch -O- oder/und -S- unterbrochenes C₄-C₁₀-Alkylen; C₆-C₁₂-Cycloalkylen oder Phenylen darstellt, wenn n 3 ist, R₃ C₃-C₈-Alkantriyl bedeutet und wenn n 4 ist, R₃ C₄-C₈-Alkantetrayl darstellt.

Alkyl mit bis zu 20 Kohlenstoffatomen bedeutet zum Beispiel Methyl, Ethyl, Propyl, i-Propyl, s-Butyl, t-Butyl, t-Pentyl, Hexyl, 2-Ethylhexyl, n-Octyl, i-Octyl, 1,1,3,3-Tetramethylbutyl, Decyl, Dodecyl, Tridecyl, Hexadecyl, Octadecyl, Nonadecyl oder Icosyl. Zwei der bevorzugten Bedeutungen für R₁ und R₂ sind Methyl und t-Butyl. R₃ bedeutet insbesondere C₈-C₁₃-Alkyl.

Durch -O- oder/und -S- unterbrochenes C₃-C₂₀-Alkyl bedeutet zum Beispiel 3-Oxaheptyl, 3-Oxa-5-methylhexyl, 3-Thiaheptyl oder 3-Thia-5-methylhexyl. Zwischen der freien Valenz und dem ersten Heteroatom befindet sich bevorzugt eine Alkylengruppe mit zwei oder mehr Kohlenstoffatomen.

C₃-C₂₀-Alkenyl bedeutet zum Beispiel Allyl oder Oleyl. Das Kohlenstoffatom in 1-Position ist vorzugsweise gesättigt.

Unsubstituiertes oder durch C₁-C₄-Alkyl substituiertes Cycloalkyl mit bis zu 12 Kohlenstoffatomen bedeutet zum Beispiel Cyclopentyl, Cyclohexyl, Cycloheptyl, Cyclooctyl, Cyclodecyl, Cyclododecyl, Methylcyclohexyl oder Butylcyclohexyl. Cyclohexyl ist bevorzugt.

Durch C₁-C₄-Alkyl substituiertes Phenyl bedeutet zum Beispiel Methylphenyl, Dimethylphenyl oder Butylphenyl.

Unsubstituiertes oder durch C₁-C₄-Alkyl substituiertes C₇-C₁₀-Phenylalkyl bedeutet zum Beispiel Benzyl, Methylbenzyl, Dimethylbenzyl, Trimethylbenzyl, t-Butylbenzyl oder Phenylethyl. Benzyl ist bevorzugt.

C₂-C₁₀-Alkylen bedeutet zum Beispiel Methylen, Ethylen, Trimethylen, Tetramethylen, Pentamethylen, 2,2-Dimethyltrimethylen, Hexamethylen, Octamethylen oder Decamethylen. C₂-C₆-Alkylen, insbesondere Hexamethylen, ist bevorzugt.

Durch -O- oder/und -S- unterbrochenes C₄-C₁₀-Alkylen bedeutet zum Beispiel 4-Oxaheptamethylen-1,7;3,6-Dioxaoctamethylen-1,8; 2-Thiapropylen-1,3 oder 3-Thiapentylen-1,5. Bevorzugt sind die Gruppen -(CH₂)₂-S-(CH₂)₂- und -(CH₂)₂-O-(CH₂)₂-O-(CH₂)₂-.

C₆-C₁₂-Cycloalkylen bedeutet zum Beispiel Cyclohexylen oder Dicyclohexylen. 1,4-Cyclohexylen ist bevorzugt.

Phenylen bedeutet 1,2-, 1,3- oder 1,4-Phenylen.

C₃-C₈-Alkantriyl bedeutet zum Beispiel

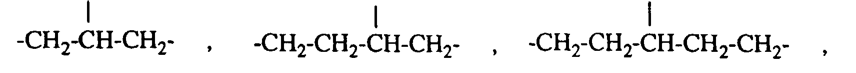

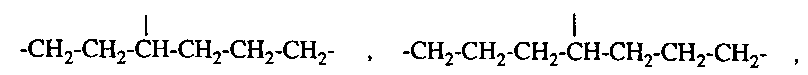

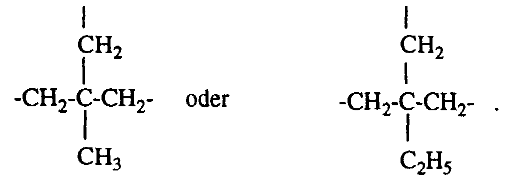

C₄-C₈-Alkantetrayl bedeutet zum Beispiel 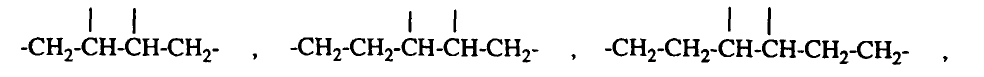 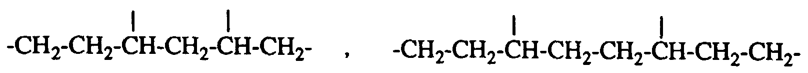 oder 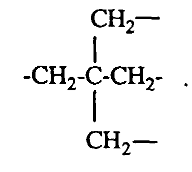 Pentaerythrityl ist bevorzugt.

Bevorzugt sind Verbindungen der Formel (I), worin n 1, 2, 3 oder 4 ist, R₁ und R₂ unabhängig voneinander C₁-C₄-Alkyl oder Cyclohexyl bedeuten und wenn n 1 ist, R₃ C₅-C₁₈-Alkyl, durch -O- oder -S- unterbrochenes C₃-C₂₀-Alkyl; C₃-C₂₀-Alkenyl, C₅-C₇-Cycloalkyl, durch C₁-C₄-Alkyl substituiertes C₅-C₇-Cycloalkyl; Phenyl, durch C₁-C₄-Alkyl substituiertes Phenyl; Benzyl oder am Phenylrest durch C₁-C₄-Alkyl substituiertes Benzyl bedeutet und wenn n 2 ist, R₃ C₂-C₈-Alkylen, durch -O- oder -S-unterbrochenes C₄-C₁₀-Alkylen, Cyclohexylen oder Phenylen darstellt.

Ebenfalls bevorzugt sind Verbindungen der Formel (I), worin n 1, 2, 3 oder 4 ist, R₁ und R₂ unabhängig voneinander Methyl, t-Butyl oder Cyclohexyl bedeuten und wenn n 1 ist, R₃ C₅-C₁₅-Alkyl, durch -O- oder -S- unterbrochenes C₃-C₁₀-Alkyl; C₃-C₂₀-Alkenyl, Cyclohexyl, durch Methyl oder Butyl substituiertes Cyclohexyl; Phenyl, durch Methyl oder Butyl substituiertes Phenyl; oder Benzyl bedeutet und wenn n 2 ist, R₃ C₂-C₆-Alkylen oder durch -O- oder -S- unterbrochenes C₄-C₆-Alkylen bedeutet.

Von Interesse sind auch Verbindungen der Formel (I), worin n 1, 2 oder 4 ist, R₁ und R₂ unabhängig voneinander Methyl oder t-Butyl bedeuten und wenn n 1 ist, R₃ C₈-C₁₃-Alkyl darstellt, wenn n 2 ist, R₃ C₂-C₆-Alkylen oder durch -O- unterbrochenes C₄-C₆-Alkylen ist und wenn n 4 bedeutet, R₃ Pentaerythrityl darstellt.

Besonders bevorzugt sind Verbindungen der Formel (I), worin n 1 bedeutet, R₁ und R₂ t-Butyl darstellen, X Methylen bedeutet und R₃ C₈-C₁₃-Alkyl ist.

Von besonderem Interesse sind i-Octyl-(3,5-di-t-butyl-4-hydroxybenzylthio)acetat und i-Tridecyl-(3,5-di-t-butyl-4-hydroxybenzylthio)acetat.

Die Verbindungen der Formel (I) sind bekannt. Sie können, sofern sie nicht im Handel erhältlich sind, in Analogie zu bekannten Verfahren, beispielsweise wie in GB-A-1 135 699 beschrieben, hergestellt werden.

Die Verbindungen der Formel (I) verbessern neben der Lagerungsbeständigkeit auch die Verarbeitungsstabilität von Russ-Kautschuk.

Die in den erfindungsgemässen Zusammensetzungen enthaltene Komponente a) ist zum Beispiel

ein russhaltiges Homopolymer aus Butadien, Isopren oder Chloropren oder

ein russhaltiges Copolymer eines Diens, wie Butadien oder Isopren, mit Styrol, Acrylnitril, Ethylen, Propylen oder Isobutylen oder

ein russhaltiges Terpolymer von Ethylen mit Propylen und einem Dien, wie Dicyclopentadien, 1,4-Hexadien oder Ethylidennorbornen, oder ein russhaltiges Terpolymer von Butadien mit Isopren und Styrol.

Der Dien-Anteil im Russ-Kautschuk beträgt zweckmässigerweise 0,3-100 Gew.%.

Der Dien-Anteil in den Copolymeren beträgt bevorzugt 50-90 Gew.%.

Der Dien-Anteil in dem russhaltigen terpolymeren Kautschuk Butadien-Isopren-Styrol beträgt insbesondere 50-90 Gew.%, wobei das Verhältnis Butadien/isopren z.B. 1:2-2:1 ist. Der Dien-Anteil in einem russhaltigen terpolymeren Kautschuk aus Ethylen mit Propylen und einem Dien beträgt z.B. 0,3-10 Gew.%, wobei das Verhältnis Ethylen/Propylen bevorzugt 1:2-2:1 ist.

Der angegebene Dien-Anteil bezieht sich jeweils auf den Kautschuk ohne Russ.

Als Beispiele für Russ-Kautschuk seien insbesondere auch russhaltige Butadien-Homopolymere, russhaltige Isobutylen-Isopren-Copolymere, russhaltige Styrol-Butadien-Copolymere, russhaltige Acrylnitril-Butadien-Copolymere oder russhaltiger halogenierter Isopren-Isobutylen-Kautschuk genannt.

Bevorzugt ist ein auf Dien-Monomeren basierender homopolymerer, copolymerer oder terpolymerer Russ-Kautschuk, worin das Dien-Monomer Butadien, Isopren, Chloropren, Dicyclopentadien, 1,4-Hexadien oder Ethylidennorbornen ist.

Russ-Polybutadien, Russ-Polyisopren und Russ-Styrol-Butadien-Copolymer sind als Komponente a) besonders bevorzugt.

Von Interesse ist auch eine stabilisierte Zusammensetzung, worin die Komponente a) ein auf Dien-Monomeren basierender copolymerer Russ-Kautschuk ist, der Dien-Anteil des Kautschuks 50 bis 90 Gew.%, bezogen auf den Kautschuk ohne Russ, beträgt, die Dien-Monomeren Butadien, Isopren oder Chloropren sind und die Comonomeren Styrol, Acrylnitril oder Isobutylen darstellen.

Die Einarbeitung von Russ in den Kautschuk erfolgt bei der industriellen Produktion zweckmässigerweise nach der Polymerisation direkt in den erhaltenen Latex, also noch vor der Koagulation. Der Russ wird mit einem oberflächenaktiven Mittel in Wasser aufgeschlämmt und dem Latex eventuell zusammen mit einem Oel zugesetzt. Es hat sich herausgestellt, das die Zugabe eines Oels die Handhabung des Kautschuks bei der Weiterverarbeitung erleichtert.

Gegenstand der vorliegenden Erfindung ist daher auch eine Rußkautschuk-Zusammensetzung, enthaltend als zusätzliche Komponente c) 0,01 bis 90 Gew.%, z.B. 0,01 bis 35 Gew.%, insbesondere 0,01 bis 14 Gew.%, oder 14 bis 90 Gew.%, insbesondere 35 bis 70 Gew.%, bezogen auf den Kautschuk ohne Russ, eines naphthenischen, aromatischen oder paraffinischen Oels oder deren Gemische.

Das Gewichtsverhältnis Russ/Kautschuk in der Komponente a) beträgt bevorzugt 0,2/1 bis 1/1, insbesondere 0,2/1 bis 0,5/1, z.B. 0,3/1 bis 0,5/1.

Die Verbindungen der Formel (I) liegen zum Beispiel in einer Konzentration von 0,05 bis 5 Gew.%, bevorzugt 0,05 bis 2 Gew.%, insbesondere 0,1 bis 2 Gew.%, bezogen auf den Kautschuk ohne Russ, in den erfindungsgemässen Zusammensetzungen vor. Sie können - gegebenenfalls in Kombination mit weiteren herkömmlichen Additiven - dem Latex beispielsweise in Form einer Lösung, Emulsion oder Dispersion zugesetzt werden. Häufig wird das Stabilisatorsystem zusammen mit der Russ-Aufschlemmung und dem Oel in den Kautschuk-Latex eingerührt.

Als herkömmliche Additive sind beispielsweise zu nennen:
1. Antioxidantien
   1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6- (1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
   1.4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
   1.5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
   1.6. O-, N- und S-Benzylverbindungen, z.B. 3,5,3',5'-Tetra-tert-butyl-4,4'-dihydroxydibenzylether, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid.
   1.7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
   1.8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetrarnethylbenzol, 2,4,6-Tris-(3,5-di-tert-butyl-4-hydroxybenzyl)-phenol.
   1.9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2,4,6-Tris-(3,5-di-tert-butyl4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   1.10. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]octan.
   1.13. Ester der β-(5-tert-Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
2. UV-Absorber und Lichtschutzmittel
   2.1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; [R-CH₂CH₂-COO(CH₂)₃ 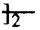 mit R = 3'-tert-Butyl-4'-hydroxy-5'-2H-benztriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenyl-salicylat, Phenylsalicylat, Octylphenyl-salicylat, Dibenzoylresorcin, Bis-(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetra-methylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzyl-phosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3 ,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1 -(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   2.7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5' di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8.2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Weitere Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)methylphosphit, Bis-(2,4-di-tert-butyl-6-methylphenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B. 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
10. Sonstige Zusätze, wie z.B. Weichmacher, Gleitmittel, Emulgatoren, Pigmente, Optische Aufheller, Flammschutzmittel, Antistatika, Treibmittel.
11. Benzofuranone bzw. Indolinone, wie z.B. in US-A-4 325 863 oder US-A-4 338 244 beschrieben.

Das folgende Beispiel erläutert die Erfindung weiter. Teil- und Prozentangaben beziehen sich auf das Gewicht, sofern nichts anderes angegeben ist.

### Beispiel 1:

### I) Herstellung eines Walzfells aus Russ-Kautschuk.

100 Teile Styrol-Butadien-Kautschuk (®ESBR Buna EM 1502), 40 Teile Russ N 110, 5 Teile eines aromatischen Oels (®Naftolen NV) und der in Tabelle 1 oder 2 angegebene Stabilisator werden in einem Labor-Innenmischer ® Werner & Pfleiderer Typ LH 1 bei 60°C und 50 U/min gemischt. Der erhaltene Russ-Kautschuk wird bei 50°C 5 Minuten auf einem Mischwalzwerk gewalzt.

### II) Ofenalterung

Aus dem, wie unter I) beschrieben, erhaltenen Walzfell werden in einer Presse bei 80°C in 10 Minuten 10 mm dicke Platten gepresst, die bei 70°C einer Ofenalterung unterworfen werden. Die Mooneyviskositäten, welche ein Mass für die oxidative Vernetzung des Russ-Kautschuks sind, werden in regelmässigen Zeitabständen nach ASTM D 1646-72 bestimmt. Um zu verhindern, dass der Messbereich des Gerätes bereits nach kurzen Alterungszeiten überschritten wird, werden, abweichend von den üblichen Bedingungen, die als Wirkungskriterium herangezogenen Mooneyviskositäten bei 150°C nach einer Vorwärmzeit von 4 Minuten ermittelt. Geringe Aenderungen in der Mooneyviskosität zeigen eine gute Stabilisierung des Russ-Kautschuks. Die Ergebnisse sind in der nachfolgenden Tabelle 1 aufgeführt.

**Tabelle 1:**

| Stabilisator | Mooneyviskosität (ML 4+4(150)) des Russ-Kautschuks (Russ-SBR) nach Wochen Ofenalterung bei 70°C | | | | |
|---|---|---|---|---|---|
| | 0 | 4 | 5 | 6 | 7 |
| - | 42 | 60 | 68 | 82 | - |
| 0,3% (A) | 42 | 54 | 57 | 66 | 68 |

0,3% bedeutet 3 Teile auf 100 Teile Styrol-Butadien-Kautschuk.
(A): i-Tridecyl-(3,5-di-tert-butyl-4-hydroxybenzylthio)acetat

### III) Brabenderalterung

Das, wie unter I) beschrieben, erhaltene Walzfell wird in einem Brabender bei 180°C und 60 U/min 30 Minuten belastet. Die Stärke des Drehmomentanstiegs (Drehmomentmaximum) ist ein Mass für die Wirksamkeit der Stabilisierung, denn Temperatur, auftretende Scherkräfte und Sauerstoff schädigen den Kautschuk. Die Stabilisierung ist umso besser, je kleiner das Drehmomentmaximum ist. Die Versuchsergebnisse sind in Tabelle 2 angegeben.

**Tabelle 2:**

| Stabilisator | Drehmomentmaximum in Nm nach 30 min Brabenderalterung bei 180°C und 60U/min |
|---|---|
| - | 28,7 |
| 0,3% (A) | 17,2 |

0,3% bedeutet 3 Teile auf 100 Teile Styrol-Butadien-Kautschuk. (A): i-Tridecyl-(3,5-di-tert-butyl-4-hydroxybenzylthio)acetat

## Patentansprüche

1. Ein auf Dien-Monomeren basierender homopolymerer, copolymerer oder terpolymerer Russ-Kautschuk enthaltend mindestens eine Verbindung der Formel (I), 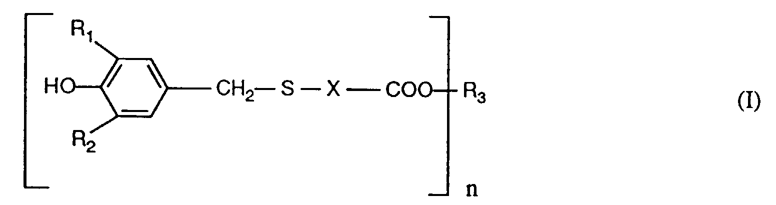 worin n 1, 2, 3 oder 4 bedeutet, R₁ und R₂ unabhängig voneinander C₁-C₄-Alkyl oder C₅-C₈-Cycloalkyl bedeuten, X Methylen oder Ethylen ist und wenn n 1 ist, R₃ C₁-C₂₀-Alkyl, durch -O- oder/und -S- unterbrochenes C₃-C₂₀-Alkyl; C₃-C₂₀-Alkenyl, C₅-C₁₂-Cycloalkyl, durch C₁-C₄-Alkyl substituiertes C₅-C₁₂-Cycloalkyl; Phenyl, durch C₁-C₄-Alkyl substituiertes Phenyl; C₇-C₁₀-Phenylalkyl oder am Phenylrest durch C₁-C₄-Alkyl substituiertes C₇-C₁₀-Phenylalkyl bedeutet, wenn n 2 ist, R₃ C₂-C₁₀-Alkylen, durch -O- oder/und -S- unterbrochenes C₄-C₁₀-Alkylen; C₆-C₁₂-Cycloalkylen oder Phenylen darstellt, wenn n 3 ist, R₃ C₃-C₈-Alkantriyl bedeutet und wenn n 4 ist, R₃ C₄-C₈-Alkantetrayl darstellt.

2. Russ-Kautschuk gemäss Anspruch 1, worin n 1, 2, 3 oder 4 ist, R₁ und R₂ unabhängig voneinander C₁-C₄-Alkyl oder Cyclohexyl bedeuten und wenn n 1 ist, R₃ C₅-C₁₈-Alkyl, durch -O- oder -S- unterbrochenes C₃-C₂₀-Alkyl; C₃-C₂₀-Alkenyl, C₅-C₇-Cycloalkyl, durch C₁-C₄-Alkyl substituiertes C₅-C₇-Cycloalkyl; Phenyl, durch C₁-C₄-Alkyl substituiertes Phenyl; Benzyl oder am Phenylrest durch C₁-C₄-Alkyl substituiertes Benzyl bedeutet und wenn n 2 ist, R₃ C₂-C₈-Alkylen, durch -O- oder -S- unterbrochenes C₄-C₁₀-Alkylen, Cyclohexylen oder Phenylen darstellt.

3. Russ-Kautschuk gemäss Anspruch 1, worin n 1, 2, 3 oder 4 ist, R₁ und R₂ unabhängig voneinander Methyl, t-Butyl oder Cyclohexyl bedeuten und wenn n 1 ist, R₃ C₅-C₁₅-Alkyl, durch -O- oder -S- unterbrochenes C₃-C₁₀-Alkyl; C₃-C₂₀-Alkenyl, Cyclohexyl, durch Methyl oder Butyl substituiertes Cyclohexyl; Phenyl, durch Methyl oder Butyl substituiertes Phenyl; oder Benzyl bedeutet und wenn n 2 ist, R₃ C₂-C₆-Alkylen oder durch -O- oder -S- unterbrochenes C₄-C₆-Alkylen bedeutet.

4. Russ-Kautschuk gemäss Anspruch 1, worin n 1, 2 oder 4 ist, R₁ und R₂ unabhängig voneinander Methyl oder t-Butyl bedeuten und wenn n 1 ist, R₃ C₈-C₁₃-Alkyl darstellt, wenn n 2 ist, R₃ C₂-C₆-Alkylen oder durch -O- unterbrochenes C₄-C₆-Alkylen ist und wenn n 4 bedeutet, R₃ Pentaerythrityl darstellt.

5. Russ-Kautschuk gemäss Anspruch 1, worin n 1 bedeutet, R₁ und R₂ t-Butyl darstellen, X Methylen bedeutet und R₃ C₈-C₁₃-Alkyl ist.

6. Russ-Kautschuk gemäss Anspruch 1, worin das Dien-Monomer Butadien, Isopren, Chloropren, Dicyclopentadien, 1,4-Hexadien oder Ethylidennorbornen ist.

7. Russ-Kautschuk gemäss Anspruch 1, worin der Dien-Anteil des Kautschuks 0,3 bis 100 Gew.%, bezogen auf den Kautschuk ohne Russ, beträgt.

8. Russ-Kautschuk gemäss Anspruch 1, worin der Russ-Kautschuk Russ-Polybutadien, Russ-Polyisopren oder Russ-Styrol-Butadien-Copolymer ist.

9. Russ-Kautschuk gemäss Anspruch 1, worin der Russ-Kautschuk ein auf Dien-Monomeren basierender copolymerer Russ-Kautschuk ist, der Dien-Anteil des Kautschuks 50 bis 90 Gew.%, bezogen auf den Kautschuk ohne Russ, beträgt, die Dien-Monomeren Butadien, Isopren oder Chloropren sind und die Comonomeren Styrol, Acrylnitril oder Isobutylen darstellen.

10. Russ-Kautschuk gemäss Anspruch 1, worin das Gewichtsverhältnis Russ/Kautschuk 0,21 bis 1/1 beträgt.

11. Russ-Kautschuk gemäss Anspruch 1, worin die Verbindung der Formel (I) in einer Konzentration von 0,05 bis 5 Gew.%, bezogen auf den Kautschuk ohne Russ, vorliegt.

12. Russ-Kautschuk gemäss Anspruch 1 enthaltend als zusätzliche Komponente 0,01 bis 90 Gew.%, bezogen auf den Kautschuk ohne Russ, eines naphthenischen, aromatischen oder paraffinischen Oels oder deren Gemische.

13. Verfahren zum Stabilisieren von auf Dien-Monomeren basierendem homopolymerem, copolymerem oder terpolymerem Russ-Kautschuk gegen oxidative Vernetzung, dadurch gekennzeichnet, dass in den Russ-Kautschuk mindestens eine Verbindung der in Anspruch 1 definierten Formel (I) eingearbeitet wird.

## Claims

1. A carbon black-filled rubber homopolymer, copolymer or terpolymer based on diene monomers, comprising at least one compound of formula (I) 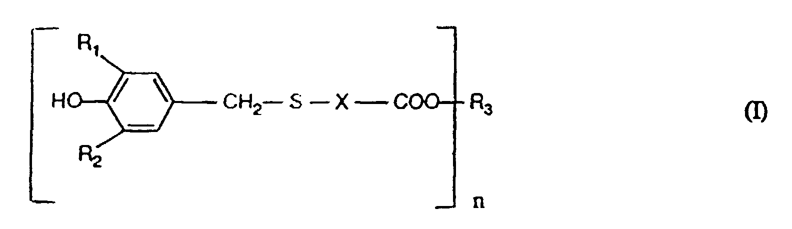 wherein n is 1, 2, 3 or 4, R₁ and R₂ are each independently of the other C₁-C₄alkyl or C₅-C₈cycloalkyl, X is methylene or ethylene and, when n is 1, R₃ is C₁-C₂₀alkyl, C₃-C₂₀alkyl which is interrupted by -O- and/or -S-; C₃-C₂₀alkenyl, C₅-C₁₂cycloalkyl, C₁-C₄alkyl-substituted C₅-C₁₂cycloalkyl; phenyl, C₁-C₄alkyl-substituted phenyl; C₇-C₁₀phenylalkyl or C₇-C₁₀phenylalkyl which is substituted on the phenyl radical by C₁-C₄alkyl; when n is 2, R₃ is C₂-C₁₀alkylene, C₄-C₁₀alkylene which is interrupted by -O- and/or -S-; C₆-C₁₂cycloalkylene or phenylene; when n is 3, R₃ is C₃-C₈alkanetriyl and, when n is 4, R₃ is C₄-C₈alkanetetrayl.

2. A carbon black-filled rubber according to claim 1, wherein n is 1, 2, 3 or 4, R₁ and R₂ are each independently of the other C₁-C₄alkyl or cyclohexyl and, when n is 1, R₃ is C₅-C₁₈alkyl, C₃-C₂₀alkyl which is interrupted by -O- or -S-; C₃-C₂₀alkenyl, C₅-C₇cycloalkyl, C₁-C₄alkyl- substituted C₅-C₇cycloalkyl; phenyl, C₁-C₄alkyl-substituted phenyl; benzyl or benzyl which is substituted on the phenyl radical by C₁-C₄alkyl and, when n is 2, R₃ is C₂-C₈alkylene, C₄-C₁₀alkylene which is interrupted by -O- or -S-, or is cyclohexylene or phenylene.

3. A carbon black-filled rubber according to claim 1, wherein n is 1, 2, 3 or 4, R₁ and R₂ are each independently of the other methyl, tert-butyl or cyclohexyl and, when n is 1, R₃ is C₅-C₁₅alkyl, C₃-C₁₀alkyl which is interrupted by -O- or -S-; C₃-C₂₀alkenyl, cyclohexyl, methyl- or butyl-substituted cyclohexyl; phenyl, methyl- or butyl-substituted phenyl; or benzyl, and, when n is 2, R₃ is C₂-C₆alkylene or is C₄-C₆alkylene which is interrupted by -O- or -S-.

4. A carbon black-filled rubber according to claim 1, wherein n is 1, 2 or 4, R₁ and R₂ are each independently of the other methyl or tert-butyl and, when n is 1, R₃ is C₈-C₁₃alkyl and, when n is 2, R₃ is C₂-C₆alkylene or is C₄-C₆alkylene which is interrupted by -O- and, when n is 4, R₃ is pentaerythrityl.

5. A carbon black-filled rubber according to claim 1, wherein n is 1, R₁ and R₂ are tert-butyl, X is methylene and R₃ is C₈-C₁₃alkyl.

6. A carbon black-filled rubber according to claim 1, wherein the diene monomer is butadiene, isoprene, chloroprene, dicyclopentadiene, 1,4-hexadiene or ethylidenenorbornene.

7. A carbon black-filled rubber according to claim 1, wherein the diene content of the rubber is 0.3 to 100 % by weight, based on the rubber without carbon black.

8. A carbon black-filled rubber according to claim 1, wherein the carbon black-filled rubber is carbon black-filled polybutadiene, carbon black-filled polyisoprene or a carbon black-filled styrene-butadiene copolymer.

9. A carbon black-filled rubber according to claim 1, wherein the carbon black-filled rubber is a diene monomer-based carbon black-filled copolymer containing 50 to 90 % by weight of diene, based on the rubber without carbon black, the diene monomers are butadiene, isoprene or chloroprene, and the comonomers are styrene, acrylonitrile or isobutylene.

10. A carbon black-filled rubber according to claim 1, wherein the weight ratio of carbon black/rubber is 0.2/1 to 1/1.

11. A carbon black-filled rubber according to claim 1, wherein the compound of formula (I) is in a concentration of 0.05 to 5 % by weight , based on the rubber without carbon black.

12. A carbon black-filled rubber according to claim 1, comprising as additional component 0.01 to 90 % by weight, based on the rubber without carbon black, of a naphthenic, aromatic or paraffinic oil or a mixture thereof.

13. A process for stabilising a carbon black-filled rubber homopolymer, copolymer or terpolymer based on diene monomers against oxidative crosslinking, which comprises incorporating in the carbon black-filled rubber at least one compound of formula (I) as defined in claim 1.

## Revendications

1. Caoutchouc au noir de carbone homopolymère, copolymère ou terpolymère à base de monomères diéniques contenant au moins un composé de formule (I) 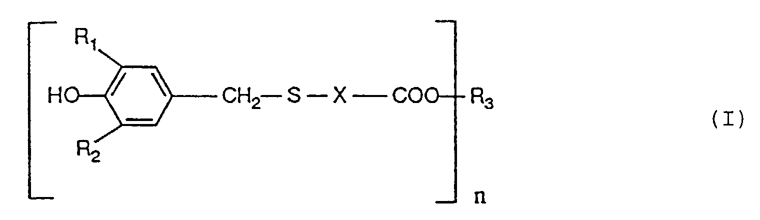 où n vaut 1, 2, 3 ou 4, R₁ et R₂, indépendamment l'un de l'autre, représentent alkyle en C₁-C₄ ou cycloalkyle en C₅-C₈, X représente méthylène ou éthylène, et lorsque n vaut 1, R₃ représente alkyle en C₁-C₂₀, alkyle en C₃-C₂₀ interrompu par -O- et/ou -S- ; alcényle en C₃-C₂₀, cycloalkyle en C₅-C₁₂, cycloalkyle en C₅-C₁₂ substitué par alkyle en C₁-C₄ ; phényle, phényle substitué par alkyle en C₁-C₄ ; phénylalkyle en C₇-C₁₀ ou phénylalkyle en C₇-C₁₀ substitué sur le reste phényle par alkyle en C₁-C₄, lorsque n vaut 2, R₃ représente alkylène en C₂-C₁₀, alkylène en C₄-C₁₀ interrompu par -O- et/ou -S- cycloalkylène en C₆-C₁₂ ou phénylène, lorsque n vaut 3, R₃ représente alcanetriyle en C₃-C₈ et lorsque n vaut 4, R₃ représente alcanetétrayle en C₄-C₈.

2. Caoutchouc au noir de carbone selon la revendication 1, où n vaut 1, 2, 3 ou 4, R₁ et R₂, indépendamment l'un de l'autre, représentent alkyle en C₁-C₄ ou cyclohexyle, et lorsque n vaut 1, R₃ représente alkyle en C₅-C₁₈, alkyle en C₃-C₂₀ interrompu -O- ou -S- ; alcényle en C₃-C₂₀, cycloalkyle en C₅-C₇, un cycloalkyle en C₅-C₇ substitué par alkyle en C₁-C₄ ; phényle, phényle substitué par alkyle en C₁-C₄ ; benzyle ou benzyle substitué par alkyle en C₁-C₄ sur le reste phényle, et lorsque n vaut 2, R₃ représente alkylène en C₂-C₈, alkylène en C₄-C₁₀ interrompu par -O- ou -S-, cyclohexylène ou phénylène.

3. Caoutchouc au noir de carbone selon la revendication 1, où n vaut 1, 2, 3 ou 4, R₁ et R₂ indépendamment l'un de l'autre, représentent méthyle, t-butyle ou cyclohexyle et lorsque n vaut 1, R₃ représente alkyle en C₅-C₁₅, alkyle en C₃-C₁₀ interrompu par -O- ou -S- ; alcényle en C₃-C₂₀, cyclohexyle, cyclohexyle substitué par méthyle ou butyle ; phényle, phényle substitué par méthyle ou butyle ; ou représente benzyle et lorsque n vaut 2, R₃ représente alkylène en C₂-C₆ ou alkylène en C₄-C₆ interrompu par -O- ou -S-.

4. Caoutchouc au noir de carbone selon la revendication 1, où n vaut 1, 2 ou 4, R₁ et R₂, indépendamment l'un de l'autre, représentent méthyle ou t-butyle, et lorsque n vaut 1, R₃ représente alkyle en C₈-C₁₃, lorsque n vaut 2, R₃ représente alkylène en C₂-C₆ ou alkylène en C₄-C₆ interrompu par -O-, et lorsque n vaut 4, R₃ représente pentaérythrityle.

5. Caoutchouc au noir de carbone selon la revendication 1, où n vaut 1, R₁ et R₂ sont t-butyle, X représente méthylène et R₃ alkyle en C₈-C₁₃.

6. Caoutchouc au noir de carbone selon la revendication 1, où le monomère diénique est le butadiène, l'isoprène, le chloroprène, le dicyclopentadiène, le 1,4-hexadiène ou l'éthylidène-norbornène.

7. Caoutchouc au noir de carbone selon la revendication 1, où la teneur en diène dans le caoutchouc est de 0,3 à 100 % en poids, par rapport au caoutchouc sans noir de carbone.

8. Caoutchouc au noir de carbone selon la revendication 1, où le caoutchouc au noir de carbone est le noir de carbone-polybutadiène, le noir de carbone-polyisoprène ou le copolymère de noir de carbone-styrène-butadiène.

9. Caoutchouc au noir de carbone selon la revendication 1, où le caoutchouc au noir de carbone est caoutchouc au noir de carbone copolymère à base de monomères diéniques, la teneur en diène dans le caoutchouc est de 50 à 90 %, par rapport au caoutchouc sans noir de carbone, les monomères diéniques sont le butadiène, l'isoprène ou le chloroprène et les comonomères représentent le styrène, l'acrylonitrile ou l'isobutylène.

10. Caoutchouc au noir de carbone selon la revendication 1, où le rapport pondéral du noir de carbone/caoutchouc est de 0,2/1 à 1/1.

11. Caoutchouc au noir de carbone selon la revendication 1, où le composé de formule (I) est présent dans une concentration de 0,05 à 5 % en poids, par rapport au caoutchouc sans noir de carbone.

12. Caoutchouc au noir de carbone selon la revendication 1, contenant comme composant supplémentaire de 0,01 à 90 % en poids, par rapport au caoutchouc sans noir de carbone, d'une huile naphténique, aromatique ou paraffinique ou leurs mélanges.

13. Procédé de stabilisation de caoutchouc au noir de carbone homopolymère, copolymère ou terpolymère à base de monomères diéniques, contre la réticulation par oxydation, caractérisé en ce que le caoutchouc au noir de carbone contient au moins un composé de formule (I) définie dans la revendication 1.
